(19) Europäisches Patentamt / European Patent Office / Office européen des brevets

(11) **EP 2 411 468 B1**

(12) **EUROPEAN PATENT SPECIFICATION**

(45) Date of publication and mention
of the grant of the patent:
**16.09.2020 Bulletin 2020/38**

(21) Application number: **10710344.2**

(22) Date of filing: **25.03.2010**

(51) Int Cl.:
**C08G 12/40** *(2006.01)*    **C08G 12/42** *(2006.01)*
**C08L 61/20** *(2006.01)*    **C08L 61/24** *(2006.01)*
**C08L 61/28** *(2006.01)*    **B01D 39/16** *(2006.01)*
**B01D 39/20** *(2006.01)*    **C08L 61/32** *(2006.01)*

(86) International application number:
**PCT/EP2010/053960**

(87) International publication number:
**WO 2010/108999 (30.09.2010 Gazette 2010/39)**

(54) **BINDER FOR FIBROUS MATERIALS**

BINDEMITTEL FÜR FASERMATERIALIEN

LIANT POUR MATIÈRES FIBREUSES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **25.03.2009 GB 0905111**

(43) Date of publication of application:
**01.02.2012 Bulletin 2012/05**

(73) Proprietor: **Prefere Resins Holding GmbH
15537 Erkner (DE)**
(72) Inventors:
• **PROCK, Christoph
A-3910 Zwettl (AT)**
• **EMSENHUBER, Martin
A-3550 Gobelsburg (AT)**
• **KOWATSCH, Stefan
A-3611 Weinzierl (AT)**
(74) Representative: **Hoyng Rokh Monegier LLP
Rembrandt Tower, 31st Floor
Amstelplein 1
1096 HA Amsterdam (NL)**
(56) References cited:
WO-A1-2009/040415    WO-A1-2009/158174
GB-A- 545 081    GB-A- 591 939
GB-A- 593 946    US-A- 2 111 622
US-A- 3 883 462    US-A- 4 430 380
US-A- 6 001 925

• "ISO 8989 - Kunststoffe - Flüssige Phenolharze -
Bestimmung der Wasserdünnbarkeit / Plastics -
liquid phenolic resins - Determination of water
miscibility", INTERNATIONAL STANDARD
ISO/IEC, XX, XX, no. ISO 8989, 1 December 1995
(1995-12-01) , pages 1-2, XP009182357,

EP 2 411 468 B1

**Description**

Field of Invention

The invention relates to a water dilutable resin composition comprising a reaction product of an aldehyde, urea, and glycerol used as a plasticizer in the resin matrix. Preferably, the aldehyde is formaldehyde. The invention further relates to the use of such a water dilutable resin composition as a binder for glass or polyester fiber mats and glass fiber filters. Generally 1-50, preferably 3-30, more preferably 5-20 wt% of cured resin on final product (which consists of fibres, cured resin and polymeric dispersion and other additives.

Background of Invention

A known problem with UF resins is that during curing they tend to emit formaldehyde, a toxic irritant. Prior art urea formaldehyde (UF) resins incorporate diethylene glycol, which acts as a plasticizer, becoming incorporated into the resin matrix upon condensation. U.S. Patent No. 1,633,337 describes a UF resin that incorporates glycerol as well. However, the resin compositions discussed in this patent are unsuitable for use as a binder for composite materials such as glass or polyester fiber products because these resins have no water solubility.

US 4430380A relates to bonded structure of textile materials bonded by a melamine-formaldehyde precondensate is produced by applying to a textile material a melamine-formaldehyde precondensate with a molar ratio of melamine to formaldehyde of 1:(0.8 to 1.26) to form a composite and then compressing the composite with an overpressure of 1 to 200 bars at temperature of from 130° to 220° C.

US 3883462 relates to a method of preparing a resinous system, and the resinous system produced by the method is described whereby 30 moles of formaldehyde, 2 moles catalyzing acid, 2 moles triethanolamine, and 12 moles of urea are sequentially reacted to provide an aqueous resinous solution.

WO 2009/158174 relates to an amino-formaldehyde resin prepared using a formulation comprising formaldehyde, glycerin and at least one compound selected from the group consisting of urea, melamine, and mixtures thereof; wherein; the amino-formaldehyde resin is prepared in a substantial absence of a sulfonating agent, ethylene glycol, and polyalkylene glycols.

Brief Summary of Invention

The object of the invention is to provide a resin composition with reduced formaldehyde emissions upon curing which is infinitely miscible with water. The inventors developed a resin composition that had a surprising reduction in formaldehyde upon curing compared to UF resins that incorporate diethylene glycol. The resin composition of the invention was further surprisingly infinitely water soluble, while the prior art UF resins incorporating glycerol were not. It is further an essential feature of the invention that the resin composition has infinite water solubility.

The resin composition of the invention comprise a resin that is a reaction product of an aldehyde, urea, and glycerol as defined in the claims, wherein the resin has an end molar ratio of aldehyde to urea between 1.0 and 3.0, and wherein the resin has an end molar ratio of urea to glycerol between 1:1.1 and 1:1100, preferably between 1:1.1 and 1:700, more preferably between 1:1.1 and 1:500 and most preferably between 1:4 and 1:40, and wherein the resin composition has a water solubility of greater than 50 parts water to one part resin composition.

The initial molar ratios represent that amounts of components prior to the undergoing of resin synthesis, whereas the end ratios represent the final molar ratios after resin synthesis.

It is known to one of ordinary skill in the art how to analyze final molar ratios. The amount of formaldehyde may be determined by total hydrolysis of the resin and quantification of the formaldehyde released by titration. The urea may be determined by GC-MS or NMR analysis. The urea may be derived from the nitrogen content of the composition determined by elemental analysis either by the Kjeldahl method or CHN analysis. The molar ratio of formaldehyde to urea may also be determined by NMR analysis.

Once the amount of urea is derived, the carbon from the urea can be subtracted from the total carbon content to obtain the sugar alcohol content.

It has been found that particularly positive results have been achieved where the end ratio of urea to sugar alcohol is between 4 and 40 in the resin composition of the present invention. Further, beneficial results were achieved where the resin composition of the present invention wherein the aldehyde is formaldehyde.

The aldehyde is preferably chosen from the group of formaldehyde and lower alkyl (C1-C4) mono- or di-aldehydes or formaldehyde precursors like paraformaldehyde or tri-oxane that can generate formaldehyde in-situ in the resin composition. It is preferable to have low levels of dialdehydes like glyoxal, and more preferably, have little to no glyoxal. Preferably, the resin is a reaction product of urea and formaldehyde.

While sugars contain either aldehyde groups or ketone groups having reactive carbon-oxygen double bonds, sugar alcohols are hydrogenated (reduced) to replace the carbonyl group with a hydroxyl group. In the resin compositions of the invention, the sugar alcohol component is preferably selected from the group consisting of glycerol, xylitol, mannitol, sorbitol, lactitol, isomalt, erythritol, maltitol syrup, water soluble hydrogenated starch, and hydrolysate maltitol. In a further embodiment, the sugar alcohol component is preferably limited to the group consisting of glycerol, xylitol, mannitol, sorbitol, lactitol, isomalt, erythritol, maltitol syrup, water soluble hydrogenated starch, and hydrolysate maltitol, and does not substantially comprise any other sugar alcohol. Further, it is preferable that the sugar alcohol contains only minor amounts of diols or polyols, such as less than 10 wt%, preferably less than 3 wt% and more preferably no diols or polyols. Further, the composition does not comprise more than 5% polyethylene glycol, and preferably no polyethylene glycol. Most preferably, the sugar alcohol component is glycerol, which is an environmentally sound choice as glycerol is a waste product from the production of biodiesel and therefore a renewable resource. The sugar alcohol component of the resin composition of the invention may be a mixture of two or more sugar alcohols.

The inventors have found that the presence of sugar alcohols in the resin compositions of the invention leads surprisingly to a significant reduction of formaldehyde emissions without significantly impacting resin strength.

The resin compositions as defined in the claims are prepared according to the following process:

- combining an aldehyde solution, and urea in a basic solution to form a mixture wherein the composition has an initial molar ratio before condensation, of aldehyde to urea of 1.5 - 4.5, preferably 1.7 - 4, more preferably 2-3.5, and most preferably 2 - 2.5
- heating the mixture to a reaction temperature for methylolation;
- cooling the mixture to a condensation temperature;
- acidifying the mixture to a pH between 2.5 and 7.5;
- condensating the mixture to a desired condensation degree;
- adding a sugar alcohol after condensation of the resin or to the mixture before methylolation and optionally additionally after condensation;
- adding after condensation a further amount of urea such that the resin composition has an end molar ratio of aldehyde to urea between 1.0 and 3.0.

In this process, suitable acids bring the mixture to the desired pH level. These acids are nitric acids, sulfuric acids, phosporic acids, hydrochloric acids, Ammonium nitrate, - sulfate, -chloride, -hydrogensulfate, -phosphate, sulfonic acids, C1-C20 carbonic and dicarbonic acids, polycarbonic acids, aromatic carbonic acids, and salts thereof.

Further, one of ordinary skill in the art will appreciate that the condensation degree done or tuned to achieve a desired water dilutability. For example, a resin composition can be obtained from the above process having a water dilutability of more than 50 grams water per gram resin. This is high dilutability is a particularly surprising effect of the resin composition according to the invention.

The inventors have thus found the resin compositions of the invention are surprisingly water soluble, making them suitable for use in manufacturing composite materials such as glass and polyester fiber mat and glass fiber filters. Further, particularly surprising beneficial effects occur where the resin composition of the present invention has composition has a solid content between 20-80% and a viscosity between 1-10000 mPas. This resin composition can be used as binder material for glass and polyester fiber mats. For example, it was found that the resin composition when implemented as a binder material for glass and polyester fiber mats worked well when the resin composition has a solid contents between 20 to 80% and a viscosity between 1 and 10,000 mPas at 20°C. Further, the resin composition can be implemented as a binder material for glass fiber filters wherein the resin composition has a solid content between 30-80% and a viscosity between 40-10,000 mPas.

Detailed Description of the Exemplary Embodiments

In the resin compositions of the invention, the sugar alcohol acts as a plasticizer of the infinite water-soluble system in the cured state but not as a plasticizer in the resin composition. In the prior art UF resins that incorporate glycerol (US 1,633,337), the glycerol apparently acted as a plasticizer in a non water-soluble system when used in much greater quantities under different condensation conditions than in the present invention. Without wishing to be bound by theory, it is believed that in the resin compositions of the present invention, the sugar alcohols prevent evaporation of free formaldehyde to a much larger extent than would be expected by a simple dilution effect during the drying of the resin solution and that at some stage during the drying and curing of the resin, the sugar alcohol reacts and chemically binds into the network of the cured resin rather than becoming embedded within the network. Thus the strength of the cured resin is not significantly weakened by the addition of the sugar alcohol. It has been found that the storability of the resin is not negatively influenced by the addition of the sugar alcohol.

The sugar alcohols in the resin composition of the present invention have boiling points greater than the curing temperature of the resin, so they do not substantially evaporate during curing. Other conventional additives may be used in manufacturing UF resins including cross-linkers, condensation catalysts, and polymer emulsions such as polyvinyl acetate, vinyl acrylic, or styrene-butadiene polymer to improve tensile and tear strengths.

The resin compositions of the invention are particularly suitable for use as binders for fibrous materials such as glass and polyester fiber mat and glass fiber filters. Generally 1-50, preferably 3-30, more preferably 5-20wt% of cured resin on final product (which includes fibers, cured resin and polymeric dispersion and other additives). Suitable resins for use as binders in glass and polyester fiber mats have the properties set forth in Table 1, and suitable resins for use as binders in glass fiber filters have the properties set forth in Table 2.

| Table 1: Resin Properties for Glass and Polyester Fiber Mats | | | | |
|---|---|---|---|---|
| | Water Tolerance | Solid Content (%) | Viscosity at 20°C (mPas) | Quantity of Free Formaldehyde (%) |
| Preferred Range | greater than 1:50 | 40-70 | 10 - 2000 | 0.2 - 1.0 |
| Extended Ranges | 1:1 -1:50 | 20-80 | 1 - 10000 | 0.01 - 3.5 |

| Table 2: Resin Properties for Glass Fiber Filters | | | | |
|---|---|---|---|---|
| | Water Tolerance | Solid Content (%) | Viscosity at 20°C (mPas) | Quantity of Free Formaldehyde (%) |
| Preferred Range | greater than 1:50 | 60 - 70 | 1000 - 2000 | 0.1 - 0.5 |
| Extended Ranges | 1:1 - 1:50 | 30 - 80 | 40 - 10000 | 0.01 - 3.5 |

Infinite water tolerance, or water solubility, is defined as a water tolerance 1: greater than 50, one part of resin to fifty parts of water. For example, the water tolerance could be 1 part resin to sixty parts of water. In these tables, the "water tolerance" measures the dilutability of the resins in water. The procedure used to measure water tolerance is as follows:

1) weigh 3 g of the resin composition into an Erlenmeyer flask
2) record the weight at a precision of 0.01 grams
3) adjust the temperature of the sample to 20°C
4) titrate the sample with distilled water at 20 +1°C while mixing thoroughly until small particles of precipitate appear on further addition of water.

The result is calculated as follows:
Calculation

$$x = \frac{V(\mathrm{ml})}{w(\mathrm{g})}$$

V Volume of distilled water added (ml)
w Sample weight (g)

Water tolerance ratio 1 : x

Unlike many conventional water soluble substances that dissolve more easily in greater amounts of water, UF resins tend to form solid precipitates in greater amounts of water. For example, many prior art UF resins form colloides when diluted with more than 10 parts of water. This can present a problem when the UF resins are used for applications such as GFT (Glass Fiber Tissue), GFF (Glass Fiber Filters) or Polyester Fiber Mats production because the production processes require the resins to have a low viscosity, which requires high water content. Thus a high water tolerance, preferably 50:1, or 50 parts water to 1 part resin by weight, is preferred. In order to achieve the requisite water tolerance, and thus the low viscosity needed for glass and polyester fiber mat production, the resin must not be highly condensed.

The processes for making glass fiber mats such as GFT using UF resins are described in some detail in publication number WO2005/035653. There are two primary processes, a "wet process" and a "dry process." In the wet process, glass fiber mats are produced in a manner very similar to the production of paper. Glass fibers of various lengths are placed in water and aqueous slurry is formed. Different fiber lengths and widths may be used for different applications, but for example, fibers with 3 mm average length and 17 μm average diameters may be used. The aqueous slurry of fibers is fed onto a moving screen on a conveyor to form a glass fiber mat while the water is separated from the fibers through the screen. Next, the resin composition is applied as a binder to the glass fiber mat through any suitable application process, for example, a falling film curtain coater. Excess binder and water may be removed by application of a vacuum system beneath the conveyor screen, which may also assist in coating the glass fiber mat through to the bottom. The resin-impregnated glass fiber mat is then conveyed through a curing oven set to a temperature in the range of 150 to 400°C, preferably 180 to 250°C for the resins of the present invention. After curing, at the end of the production line, the glass fiber mat may be rolled up.

Due to logistic reasons and to reduce transport costs, resin compositions are preferably delivered to the glass fiber mat manufacturers as concentrated solutions. The concentrated resin solutions are diluted with water before use in manufacturing the glass fiber mat. Generally, resins of the present invention may comprise 5 - 90wt% preferably 25-70wt%, more preferably 28-55wt% and most preferably 30-52wt% water by weight relative to the total composition. If resin is applied by spraying, the dry resin solids content should be between 1 and 30%, or preferably between 2 and 25% by weight. Alternatively, the resins may be manufactured at the concentrations needed for their final use in manufacturing. Tables 1 and 2 therefore each list two different ranges of properties of the resins based on different solids contents, which are directly related to resin viscosity. The first, narrower ranges include ranges of solids contents and viscosities that are most useful for delivery of the resins. Upon use, the more concentrated resins should be diluted with water to the appropriate concentrations for manufacturing. The second broader ranges include ranges of solids contents and viscosities that could lead to additional benefits like processability and manufacturing of GFT and GFF.

The invention further relates to methods for preparing the novel resin compositions of the invention as defined in the claims. These methods of the invention comprise:

- combining an aldehyde solution, and urea in a basic solution to form a mixture wherein the composition has an initial molar ratio before condensation, of aldehyde to urea of 1.5 - 4.5, preferably 1.7-4, more preferably 2-3.5, and most preferably 2 - 2.5;
- heating the mixture to a reaction temperature for methylolation;
- cooling the mixture to a condensation temperature;
- acidifying the mixture to a pH between 2.5 and 7.5;
- condensating the mixture to a desired condensation degree;
- adding a sugar alcohol after condensation of the resin or to the mixture before methylolation and optionally additionally after condensation;
- adding after condensation a further amount of urea such that the resin composition has an end molar ratio of aldehyde to urea between 1.0 and 3.0.

The sugar alcohol can be added either at the end stage, after the resin has been condensated, and alternatively, the sugar can also be added right before or during condensation of the resin, or right at the beginning of the procedure.

The acid solution comprises any of the following suitable acids: nitric acids, sulfuric acids, phosporic acids, hydrochloric acids, ammonium nitrates, - sulfates, -chlorides, - hydrogensulfates, -phosphates, -hydrogenphosphates, -dihydrogenphosphates, hydrogensulfites, sulfonic acids, C1- C20 carbonic and dicarbonic acids, polycarbonic acids, and aromatic carbonic acids. Further, the acid solution may contain mixtures of any of the aforementioned acids and salts thereof.

In another embodiment, the method of the invention comprises: (1) heating an aldehyde solution, preferably a formaldehyde solution, to 30 - 150°C, preferably 35 - 100°C, more preferably 40 - 90°C, most preferably 50 - 80°C, and especially preferably 50 - 70°C, (2) adjusting the pH of the aldehyde solution to between 1.0 - 12.0, preferably 2.5 - 10.0, more preferably 2.8 - 9.5, most preferably 3.5 - 9.2, and especially preferably 7.8 - 8.3, for example, by adding a solution of NaOH, (3) adding urea, (3) adding glycerol, (4) heating to reflux for 0 - 30, preferably 0 - 20, more preferably 0-15 minutes, (5) cooling to 75 - 98, preferably 80 - 96, more preferably 92 - 94°C, (5a) adding glycerol, if it has not been added at stage (3), (6) adjusting the pH to 2.5 - 7.5, preferably 3.0-6.8, more preferably 3.6 - 5.6, for example, by adding a solution of acetic acid, (7) condensing to a viscosity of 5 - 3000, preferably 10 - 750, more preferably 15 - 500, most preferably 20 - 300 mPas, (8) halting the condensation reaction by either adjusting the pH to 6,5 - 9,5, preferably 6,8 - 8,5 more preferably 7.0-8.2 and/or cooling to 30-85°C, preferably 40-75°C, more preferably 45-68°C, (9) adding an additional amount of urea, (10) reducing the temperature to 30-85°C, preferably 40-75°C, more preferably 45-68°C °C and distilling under reduced pressure to achieve a solids content range of 95-10 wt% preferably 75-30wt% more preferably 72-45 wt%, most preferably 70-48 wt% , (10a) glycerol, if it has not been added at stage (3) or (5a).

The following examples are provided to illustrate embodiments of the invention. In each of the following examples it was surprisingly found that by replacing diethylene glycol with a sugar alcohol in formulating a UF resin composition, the quantity of formaldehyde released upon curing was significantly reduced.

## EXAMPLE 1

Comparative Example 1 1162 gram of aqueous formaldehyde (54.9%) and 24 ml water were combined and heated to 60°C. The pH of the solution was adjusted with NaOH (50 %) to a range of 7.8 - 8.3. Then 555 grams of urea was added and the mixture was heated to reflux. The mixture was held for 10 min at reflux and then cooled to a temperature of 92 °C - 94 °C. 45 gram of diethylene glycol was added and the pH was adjusted to 4.8 - 5.0 by using acetic acid (12 %). The mixture was then condensed to a viscosity of 190 mPas - 210 mPas. After this specified viscosity was reached, NaOH (50 %) was used to adjust the pH to 7.2 - 7.5. 162 gram of urea was added and cooled to 60 °C. At a temperature of below 60 °C the mixture was distilled under vacuum until a refractive index nD20 of 1.4722 to 1.4737 was obtained. This nD20 represents the desired solid content. Then the mixture was cooled to room temperature.

### Example 1, not according to the invention

1162 gram of aqueous formaldehyde (54.9%) and 24 ml water were combined and heated to 60°C. The pH of the solution was adjusted with NaOH (50 %) to a range of 7.8 - 8.3. Then 555 grams of urea was added and the mixture was heated to reflux. The mixture was held for 10 min at reflux and then cooled to a temperature of 92 °C - 94 °C. 45 gram of diethylene glycol was added and the pH was adjusted to 4.8 - 5.0 by using acetic acid (12 %). The mixture was then condensed to a viscosity of 190 mPas - 210 mPas. After this specified viscosity was reached, NaOH (50 %) was used to adjust the pH to 7.2 - 7.5. 162 gram of urea was added and cooled to 60 °C. At a temperature of below 60 °C the mixture was distilled under vacuum until a refractive index nD20 of 1.4722 to 1.4737 was obtained. This nD20 represents the desired solid content. Then the mixture was cooled to room temperature.

The solid content is determined by weighing 1.0 - 1.1g of resin onto a metal dish (diameter 8 cm, covered with a rough metal foil) and distributed evenly. The sample is dried in an oven with forced circulation at 120°C for 120 minutes. The weight of the residue after drying is recorded after the sample had been cooled down to room temperature in a desiccator. All weights are recorded at a precision of 0.1 mg.

$$\text{solid content}(\%) = \text{weight of the residue after drying} \,/\, \text{weight of the sample.}$$

pH measurements were made according to DIN 19263.

Water dilutability was measured for comparative example 1 and example 1 using the following method. About 3 g resin was weighed in an Erlenmeyer flask (to the nearest 10 mg). Then the sample was titrated with deionate (20°C ±1°C) until the water and the resin no longer mix, as evident from small particles forming on the side of the flask upon shaking.

Free formaldehyde was measured for comparative example 1 and example 1 using a modified version of the EN ISO 9020 method.

Formaldehyde emission was measured for comparative example 1 and example 1 using the following method. The resin was cured at 200°C and the emissions were captured in water then photometrically analyzed. A glass filter was folded in a test tube, and 0.2 - 0.3 g of resin was dropped onto the filter. The test tube with the filter was put into an Erlenmeyer flask that was closed except for an inlet and outlet air tube. The flask with the test tube containing the resin sample was placed in an oven at 200°C, and the emissions were directed out of the oven through the outlet air tube into a connected series of three gas flasks. The first two gas flasks were each filled with 100 mL of distilled water. The emissions from the resin dissolved in the water, which was photometrically analyzed using the Dr. Lange Testkit LCK 325 for formaldehyde with a LASA 100 photometer. The emissions were then calculated as a fraction of the dry solids of the cured resin and thus are independent of the solid content of the resin.

Table 3 provides a comparison of several properties of the resins of comparative example 1 and example 1.

| Table 3 | | |
|---|---|---|
| | Comparative Example 1 | Example 1 |
| Solid Content (curing at 120°C for 120 minutes) | 65.8% | 65.5% |
| pH at 20°C | 8.1 | 7.9 |
| Water dilutability | Infinite (>1:50) | Infinite (>1:50) |
| Viscosity at 20°C | 586 mPas | 582 mPas |
| Free formaldehyde (borate buffer) | 0.89% | 0.95% |
| Formaldehyde emission over 25 minutes | 53 mg/g | 50 mg/g |

**EXAMPLE 2**

**Comparative example 2**

1937 grams of aqueous formaldehyde (54.9%) and 40 ml water were combined and heated to 60°C. The pH was adjusted with NaOH (50 %) to a range of 7.8 - 8.3. Then 925 grams of urea were added and heated to reflux. The mixture was held for 10 min at reflux and then cooled to a temperature of 92 °C - 94 °C. Then the pH was adjusted to 4.8 - 5.0 by using acetic acid (12 %). The mixture was then condensed to a viscosity of 190 mPas - 210 mPas. After this specified viscosity was reached NaOH (50 %) was used to adjust the pH to 7.2 - 7.5. 271 gram of urea was added and the mixture was cooled to 60 °C. At a temperature of below 60 °C the mixture was distilled under vacuum until a refractive index nD20 of 1.4722 to 1.4737 was obtained. This nD20 represents the desired solid content. Then the mixture was cooled to room temperature. 15 gram of diethylene glycol was added into 285 g of resin and mixed for 15 min at room temperature.

**Example 2, not according to the invention**

285 gram of "Comparative example 2" was combined with 15 gram of mannitol instead diethylene glycol. The mixture was stirred for 15 min at room temperature. Measurements of solid content, pH, water dilutability, viscosity, free formaldehyde, and formaldehyde emission on curing were made the same way as in Example 1.
Table 4 provides a comparison of several properties of the resins of comparative example 2 and example 2.

| Table 4 | | |
|---|---|---|
| | Comparative Example 2 | Example 2 |
| Solid Content (curing at 120°C for 120 minutes) | 65.8% | 66.5% |
| pH at 20°C | 7.5 | 8.0 |
| Water dilutability | Infinite (>1:50) | Infinite (>1:50) |
| Viscosity at 20°C | 538 mPas | 709 mPas |
| Free formaldehyde (borate buffer) | 0.92% | 0.95% |
| Formaldehyde emission over 25 minutes | 78 mg/g | 52 mg/g |

**EXAMPLE 3**

**Comparative example 3**

1937 gram of aqueous formaldehyde (54.9%) and 40 ml water were combined and heated to 60°C. The pH was adjusted with NaOH (50 %) to a range of 7.8 - 8.3. Then 925 gram of urea was added and heated to reflux. The mixture was held for 10 min at reflux and then cooled to a temperature of 92 °C - 94 °C. Then the pH was adjusted to 4.8 - 5.0 by using acetic acid (12 %). The mixture was then condensed to a viscosity of 190 mPas - 210 mPas. After this specified viscosity was reached NaOH (50 %) was used to adjust the pH to 7.2 - 7.5. 271 gram of urea was added and cooled to 60 °C. At a temperature of below 60 °C the mixture was distilled under vacuum until a refractive index nD20 of 1.4722 to 1.4737 was obtained. This nD20 represents the desired solid content. Then the mixture was cooled to room temperature. 30 gram of diethylene glycol was added into 270 g of resin and mixed for 15 min at room temperature.

**Example 3, not according to the invention**

270 gram of "Comparative example 3" was combined with 30 gram of sorbitol instead diethylene glycol. The mixture was stirred for 15 min at room temperature. Measurements of solid content, pH, water dilutability, viscosity, free formaldehyde, and formaldehyde emission on curing were made the same way as in Example 1.

Table 5 provides a comparison of several properties of the resins of comparative example 3 and example 3.

| Table 5 | | |
|---|---|---|
| | Comparative Example 3 | Example 3 |
| Solid Content (curing at 120°C for 120 minutes) | 66.0% | 67.7% |
| pH at 20°C | 7.2 | 8.0 |
| Water dilutability | Infinite (>1:50) | Infinite (>1:50) |
| Viscosity at 20°C | 510 mPas | 861 mPas |
| Free formaldehyde (borate buffer) | 0.94% | 0.93% |
| Formaldehyde emission over 25 minutes | 109 mg/g | 53 mg/g |

**EXAMPLE 4**

Example 4 not according to the invention 1937 gram of aqueous formaldehyde (54.9%) and 40 ml water were combined and heated to 60°C. The pH was adjusted with NaOH (50 %) to a range of 7.8 - 8.3. Then 925 gram of urea was added and heated to reflux. The mixture was held for 10 min at reflux and then cooled to a temperature of 92 °C - 94 °C. Then the pH was adjusted to 4.8 - 5.0 by using acetic acid (12 %). The mixture was then condensed to a viscosity of 190 mPas - 210 mPas. After this specified viscosity was reached NaOH (50 %) was used to adjust the pH to 7.2 - 7.5. 271 gram of urea was added and the mixture cooled to 60 °C. At a temperature of below 60 °C the mixture was distilled under vacuum until a refractive index nD20 of 1.4722 to 1.4737 was obtained. This nD20 represents the desired solid content. Then the mixture was cooled to room temperature.

60 gram of diethylene glycol was added into 240 g of resin and mixed for 15 min at room temperature.

**Inventive example 4**

240 gram of "example 4 not according to the invention" was combined with 60 gram of glycerol instead diethylene glycol. The mixture was stirred for 15 min at room temperature.

Measurements of solid content, pH, water dilutability, viscosity, free formaldehyde, and formaldehyde emission on curing were made the same way as in Example 1.

Table 6 provides a comparison of several properties of the resins of example 4 not according to the invention and inventive example 4.

| Table 6 | | |
|---|---|---|
| | Example 4 not according to the invention | Inventive Example 4 |
| Solid Content (curing at 120°C for 120 minutes) | 65.0% | 66.0% |
| pH at 20°C | 6.9 | 7.5 |
| Water dilutability | Infinite (>1:50) | Infinite (>1:50) |
| Viscosity at 20°C | 428 mPas | 502 mPas |
| Free formaldehyde (borate buffer) | 0.93% | 0.95% |
| Formaldehyde emission over 25 minutes | 131 mg/g | 107 mg/g |

**EXAMPLE 5**

**Example 5 not according to the invention**

1160 gram of aqueous formaldehyde (55.0 %) and 26 ml water were combined and heated to 60°C. The pH was adjusted with NaOH (50 %) to a range of 7.8 - 8.3. Then 654 gram of urea and 63 gram of diethylene glycol were added and heated to reflux. The mixture was held for 10 min at reflux and then cooled to a temperature of 92 °C - 94 °C. The pH was adjusted to 5.2 by using acetic acid (12 %). The mixture was then condensed to a viscosity of 240 mPas - 260 mPas. After this specified viscosity was reached NaOH (50 %) was used to adjust the pH to 7.2 - 7.5 and the mixture was cooled to 60 °C. At a temperature of below 60 °C the mixture was distilled under vacuum to a viscosity of 2600 - 2800 mPas. Then 197 gram of urea was added and the mixture was cooled to room temperature.

**Inventive example 5**

1160 gram of aqueous formaldehyde (55.0 %) and 26 ml water were combined and heated to 60°C. The pH was adjusted with NaOH (50 %) to a range of 7.8 - 8.3. Then 654 gram of urea and 63 gram of glycerol were added and heated to reflux. The mixture was held for 10 min at reflux and then cooled to a temperature of 92 °C - 94 °C. The pH was adjusted to 5.2 by using acetic acid (12 %). The mixture was then condensed to a viscosity of 240 mPas - 260 mPas. After this specified viscosity was reached NaOH (50 %) was used to adjust the pH to 7.2 - 7.5 and the mixture was cooled to 60 °C: At a temperature of below 60 °C the mixture was distilled under vacuum to a viscosity of 2600 - 2800 mPas. Then 197 gram of urea was added and the mixture was cooled to room temperature.

Measurements of solid content, pH, water dilutability, viscosity, free formaldehyde, and formaldehyde emission on curing were made the same way as in Example 1.

Table 7 provides a comparison of several properties of the resins of example 5 not according to the invention and inventive example 5.

| Table 7 | | |
|---|---|---|
| | Example 5 not according to the invention | InventiveExample 5 |
| Solid Content (curing at 120°C for 120 minutes) | 70.2 % | 69.3 % |
| pH at 20°C | 8 | 8 |
| Water dilutability | Infinite (>1:50) | Infinite (>1:50) |
| Viscosity at 20°C | 1470 mPas | 1820 mPas |
| Free formaldehyde (borate buffer) | 0.58% | 0.50% |
| Formaldehyde emission over 25 minutes | 42 mg/g | 37 mg/g |

**EXAMPLE 6**

**Example 6 not according to the invention**

1162 gram of aqueous formaldehyde (54.9%) and 24 ml water were combined and heated to 60°C. The pH was adjusted with NaOH (50 %) to a range of 7.8 - 8.3. Then 555 gram of urea and 90 gram of diethylene glycol were added and heated to reflux. The mixture was held for 10 min at reflux and then cooled to a temperature of 92 °C - 94 °C. The pH was adjusted to 4.8 - 5.0 by using acetic acid (12 %). The mixture was then condensed to a viscosity of 190 mPas - 210 mPas. After this specified viscosity was reached NaOH (50 %) was used to adjust the pH to 7.2 - 7.5. 162 gram of urea was added and the mixture was cooled to 60 °C. At a temperature of below 60 °C the mixture was distilled under vacuum until a refractive index nD20 of 1.4722 to 1.4737 was obtained. This nD20 represents the desired solid content. Then the mixture was cooled to room temperature.

**Inventive example 6**

1162 gram of aqueous formaldehyde (54.9%) and 24 ml water were combined and heated to 60°C. The pH was adjusted with NaOH (50 %) to a range of 7.8 - 8.3. Then 555 gram of urea and 90 gram of glycerol were added and heated to reflux. The mixture was held for 10 min at reflux and then cooled to a temperature of 92 °C - 94 °C. The pH was adjusted to 4.8 - 5.0 by using acetic acid (12 %). The mixture was then condensed to a viscosity of 190 mPas - 210 mPas. After this specified viscosity was reached NaOH (50 %) was used to adjust the pH to 7.2 - 7.5. 163 gram of urea was added and cooled to 60 °C. At a temperature of below 60 °C the mixture was distilled under until a refractive index nD20 of 1.4722 to 1.4737 was obtained. This nD20 represents the desired solid content. Then the mixture was cooled to room temperature.

Measurements of solid content, pH, water dilutability, viscosity, free formaldehyde, and formaldehyde emission on curing were made the same way as in Example 1.

Table 8 provides a comparison of several properties of the resins of example 6 not according to the invention and inventive example 6.

| Table 8 | | |
|---|---|---|
| | Example 6 not according to the invention | Inventive Example 6 |
| Solid Content (curing at 120°C for 120 minutes) | 65.9 % | 66.2 % |
| pH at 20°C | 8.2 | 7.0 |
| Water dilutability | Infinite (>1:50) | Infinite (>1:50) |
| Viscosity at 20°C | 598 mPas | 581 mPas |
| Free formaldehyde (borate buffer) | 0.93% | 0.95% |
| Formaldehyde emission over 25 minutes | 63 mg/g | 58 mg/g |

## Claims

1. A water dilutable resin composition comprising a resin that is a reaction product of an aldehyde, urea, and glycerol, wherein the composition obtainable by a process comprising the steps:

    combining an aldehyde solution with urea in a basic solution to form a mixture, wherein the composition has an initial molar ratio before condensation, of aldehyde to urea of 1.5 - 4.5;
    heating the mixture to a reaction temperature for methylolation;
    cooling the mixture to a condensation temperature;
    acidifying the mixture to a pH between 2.5 and 7.5;
    condensating the mixture to a desired condensation degree;
    adding glycerol at the end stage, before-, during- or after condensation of the resin or to the mixture before methylolation and optionally additionally after condensation;
    adding after condensation a further amount of urea such that the resin composition has an end molar ratio of aldehyde to urea between 1.0 and 3.0 and wherein the resin has an end molar ratio of urea to glycerol between 4 and 40, wherein the desired condensation degree is chosen to achieve a desired water dilutability of the resin composition of greater than 50 parts water to one part resin composition,
    wherein the pH measurement is made according to DIN 19263,
    wherein the water dilutability is determined by weighting 3g of the resin composition into an Erlenmeyer flask; recording the weight at a precision of 0.01 grams; adjusting the temperature of the sample to 20°C; titrating the sample with distilled water at 20 +/- 1°C while mixing thoroughly until small particles of precipitate appear on further addition of water, and result is calculated as follows:

$$x = V(ml)/w(g)$$

    V is Volume of distilled water added (ml);
    $w$ is Sample weight (g);
    Water tolerance ratio is 1 : $x$.

2. The composition according to claim 1, wherein the aldehyde is formaldehyde.

3. The composition according to claims 1-2, wherein the resin composition has a solid content between 20-80% and a viscosity between 1-10000 mPas at 20°C.

4. A process for preparing a water dilutable resin composition according to claims 1-3 comprising the steps:

- combining an aldehyde solution with urea in a basic solution to form a mixture wherein the composition has an initial molar ratio before condensation, of aldehyde to urea of 1.5 - 4.5;
- heating the mixture to a reaction temperature for methylolation;
- cooling the mixture to a condensation temperature;
- acidifying the mixture to a pH between 2.5 and 7.5;
- condensating the mixture to a desired condensation degree;
- adding glycerol after condensation of the resin or to the mixture before methylolation and optionally additionally after condensation;
- adding after condensation a further amount of urea such that the resin composition has an end molar ratio of aldehyde to urea between 1.0 and 3.0,
wherein the pH measurement is made according to DIN 19263.

5. The process according to claim 4, wherein the mixture is acidified with an acid selected from the group consisting of: nitric acids, sulfuric acids, phosphoric acids, hydrochloric acids, ammonium nitrates, - sulfates, -chlorides, -hydrogensulfates, -phosphates, - hydrogenphosphates, dihydrogenphosphates, hydrogensulfites, sulfonic acids, C1-C20 carbonic and dicarbonic acids, polycarbonic acids, aromatic carbonic acids, and salts thereof, and mixtures thereof.

6. The process according to claims 4 or 5 wherein the desired condensation degree is done to achieve a desired water dilutability.

7. Use of the resin composition according to claims 1-3 as a binder material for glass and polyester fiber mats.

8. Use of the resin composition according to claim 7 wherein the resin composition has a solid contents between 20 to 80 wt% and a viscosity between 1 and 10,000 mPas at 20°C.

9. Use of the resin composition according to claims 1-3 as a binder material for glass fiber filters.

10. The process for preparing a water dilutable resin composition according to claim 4, wherein the composition has an initial molar ratio before condensation, of aldehyde to urea of 1.7 - 4.

11. The process for preparing a water dilutable resin composition according to claim 4, wherein the composition has an initial molar ratio before condensation, of aldehyde to urea of 2-3.5.

12. The process for preparing a water dilutable resin composition according to claim 4, wherein the composition has an initial molar ratio before condensation, of aldehyde to urea of 2-2.5.

**Patentansprüche**

1. Wasserverdünnbare Harzzusammensetzung, die ein Harz umfasst, das ein Reaktionsprodukt eines Aldehyds, Harnstoffs und Glycerins ist, wobei die Zusammensetzung durch ein Verfahren erhalten werden kann, das die folgenden Schritte umfasst:

Kombinieren einer Aldehydlösung mit Harnstoff in einer basischen Lösung, um eine Mischung auszubilden, wobei die Zusammensetzung vor einer Kondensation ein anfängliches Molverhältnis von Aldehyd zu Harnstoff von 1,5-4,5 aufweist;
Erhitzen der Mischung auf eine Reaktionstemperatur für eine Methylolierung;
Abkühlen der Mischung auf eine Kondensationstemperatur;
Ansäuern der Mischung auf einen pH-Wert zwischen 2,5 und 7,5;
Kondensieren der Mischung auf einen gewünschten Kondensationsgrad;
Zugeben von Glycerin in der Endstufe vor, während oder nach der Kondensation des Harzes oder zu der Mischung vor der Methylolierung und optional zusätzlich nach der Kondensation;
Zugeben einer weiteren Menge Harnstoff nach der Kondensation, derart, dass die Harzzusammensetzung ein Endmolverhältnis von Aldehyd zu Harnstoff zwischen 1,0 und 3,0 aufweist, und wobei das Harz ein Endmolverhältnis von Harnstoff zu Glycerin zwischen 4 und 40 aufweist, wobei der gewünschte Kondensationsgrad gewählt wird, um eine gewünschte Wasserverdünnbarkeit der Harzzusammensetzung von über 50 Teilen Wasser auf einen Teil Harzzusammensetzung zu erreichen, wobei die pH-Wert-Messung gemäß DIN 19263 durchgeführt wird, wobei die Wasserverdünnbarkeit durch Gewichten von 3 g der Harzzusammensetzung in einen Erlenmeyerkolben bestimmt wird;

Aufzeichnen des Gewichts mit einer Genauigkeit von 0,01 Gramm;

Anpassen der Temperatur der Probe auf 20 °C;

Titrieren der Probe mit destilliertem Wasser bei 20 +/- 1 °C unter gründlichem Mischen, bis bei weiterer Zugabe von Wasser kleine Niederschlagsteilchen auftreten, und wobei das Ergebnis wie folgt berechnet wird:

$$x = V(ml)/w(g)$$

wobei

V das Volumen des zugegeben destillierten Wassers (ml) ist;
w das Probengewicht (g) ist;
das Wassertoleranzverhältnis 1:$x$ ist.

2. Zusammensetzung nach Anspruch 1, wobei das Aldehyd Formaldehyd ist.

3. Zusammensetzung nach den Ansprüchen 1-2, wobei die Harzzusammensetzung einen Feststoffgehalt zwischen 20-80 % und eine Viskosität zwischen 1-10000 mPas bei 20 °C aufweist.

4. Verfahren zum Herstellen einer wasserverdünnbaren Harzzusammensetzung nach den Ansprüchen 1-3, das die folgenden Schritte umfasst:

- Kombinieren einer Aldehydlösung mit Harnstoff in einer basischen Lösung, um eine Mischung auszubilden, wobei die Zusammensetzung vor der Kondensation ein anfängliches Molverhältnis von Aldehyd zu Harnstoff von 1,5-4,5 aufweist;
- Erhitzen der Mischung auf eine Reaktionstemperatur für die Methylolierung;
- Abkühlen der Mischung auf eine Kondensationstemperatur;
- Ansäuern der Mischung auf einen pH-Wert zwischen 2,5 und 7,5;
- Kondensieren der Mischung auf einen gewünschten Kondensationsgrad;
- Zugeben von Glycerin nach der Kondensation des Harzes oder zu der Mischung vor der Methylolierung und optional zusätzlich nach der Kondensation;
- Zugeben einer weiteren Menge Harnstoff nach der Kondensation, derart, dass die Harzzusammensetzung ein Endmolverhältnis von Aldehyd zu Harnstoff zwischen 1,0 und 3,0 aufweist, wobei die pH-Wert-Messung gemäß DIN 19263 durchgeführt wird.

5. Verfahren nach Anspruch 4, wobei die Mischung mit einer Säure angesäuert wird, die aus der Gruppe ausgewählt ist, die aus Folgendem besteht:
Salpetersäuren, Schwefelsäuren, Phosphorsäuren, Salzsäuren, Ammoniumnitraten, - sulfaten, - chloriden, - hydrogensulfaten, - phosphaten, - hydrogenphosphaten, Dihydrogenphosphaten, Hydrogensulfiten, Sulfonsäuren, C1-C20-Carbonsäure- und Dicarbonsäuren, Polycarbonsäuren, aromatischen Carbonsäuren und Salzen davon und Mischungen davon.

6. Verfahren nach den Ansprüchen 4 oder 5, wobei der gewünschte Kondensationsgrad ausgeführt wird, um eine gewünschte Wasserverdünnbarkeit zu erreichen.

7. Verwendung der Harzzusammensetzung nach den Ansprüchen 1-3 als ein Bindemittel für Glas- und Polyesterfasermatten.

8. Verwendung der Harzzusammensetzung nach Anspruch 7, wobei die Harzzusammensetzung einen Feststoffgehalt zwischen 20 bis 80 Gew.-% und eine Viskosität zwischen 1 und 10.000 mPas bei 20 °C aufweist.

9. Verwendung der Harzzusammensetzung nach den Ansprüchen 1-3 als ein Bindemittel für Glasfaserfilter.

10. Verfahren zum Herstellen einer wasserverdünnbaren Harzzusammensetzung nach Anspruch 4, wobei die Zusammensetzung vor der Kondensation ein anfängliches Molverhältnis von Aldehyd zu Harnstoff von 1,7-4 aufweist.

11. Verfahren zum Herstellen einer wasserverdünnbaren Harzzusammensetzung nach Anspruch 4, wobei die Zusammensetzung vor der Kondensation ein anfängliches Molverhältnis von Aldehyd zu Harnstoff von 2-3,5 aufweist.

12. Verfahren zum Herstellen einer wasserverdünnbaren Harzzusammensetzung nach Anspruch 4, wobei die Zusammensetzung vor der Kondensation ein anfängliches Molverhältnis von Aldehyd zu Harnstoff von 2-2,5 aufweist.

**Revendications**

1. Composition de résine diluable dans l'eau comprenant une résine qui est un produit de réaction d'un aldéhyde, d'urée et de glycérol, la composition pouvant être obtenue par un processus comprenant les étapes suivantes :

la combinaison d'une solution d'aldéhyde avec de l'urée dans une solution basique pour former un mélange, dans lequel la composition présente un rapport molaire initial avant condensation, entre l'aldéhyde et l'urée de 1,5 - 4,5 ;
le chauffage du mélange à une température de réaction pour la méthylolation ;
le refroidissement du mélange à une température de condensation ;
l'acidification du mélange à un pH compris entre 2,5 et 7,5 ;
la condensation du mélange à un degré de condensation souhaité ;
l'ajout du glycérol à l'étape finale, avant, pendant ou après la condensation de la résine ou au mélange avant la méthylolation et éventuellement en plus après la condensation ;
l'ajout après la condensation d'une quantité supplémentaire d'urée de sorte que la composition de résine présente un rapport molaire final entre l'aldéhyde et l'urée entre 1,0 et 3,0 et dans lequel la résine présente un rapport molaire final entre l'urée et le glycérol entre 4 et 40, le degré de condensation souhaité étant choisi pour atteindre une diluabilité à l'eau souhaitée de la composition de résine de plus de 50 parties d'eau pour une partie de composition de résine,
la mesure du pH étant effectuée conformément à la norme DIN 19263,
la diluabilité à l'eau étant déterminée par la pesée de 3 g de la composition de résine dans un ballon d'Erlenmeyer ; l'enregistrement du poids avec une précision de 0,01 g ; le réglage de la température de l'échantillon à 20 °C ; le titrage de l'échantillon avec de l'eau distillée à 20 ± 1 °C tout en mélangeant soigneusement jusqu'à ce que de petites particules de précipité apparaissent lors de l'ajout supplémentaire d'eau et le résultat est calculé comme suit :

$$x = \mathrm{V(ml)}/w\mathrm{(g)}$$

V représente le volume d'eau distillée ajoutée (ml) ;
$w$ représente le poids de l'échantillon (g) ;
le rapport de tolérance à l'eau est de 1:$x$.

2. Composition selon la revendication 1, dans laquelle l'aldéhyde est le formaldéhyde.

3. Composition selon les revendications 1 à 2, dans laquelle la composition de résine présente une teneur en solides entre 20 et 80 % et une viscosité entre 1 et 10 000 mPas à 20 °C.

4. Procédé de préparation d'une composition de résine diluable dans l'eau selon les revendications 1 à 3, comprenant les étapes suivantes :

- la combinaison d'une solution d'aldéhyde avec de l'urée dans une solution basique pour former un mélange dans lequel la composition présente un rapport molaire initial avant condensation, entre l'aldéhyde et l'urée de 1,5 - 4,5 ;
- le chauffage du mélange à une température de réaction pour la méthylolation ;
- le refroidissement du mélange à une température de condensation ;
- l'acidification du mélange à un pH compris entre 2,5 et 7,5 ;
- la condensation du mélange à un degré de condensation souhaité ;
- l'ajout du glycérol après la condensation de la résine ou au mélange avant méthylolation et éventuellement en plus après la condensation ;
- l'ajout après la condensation d'une quantité supplémentaire d'urée de sorte que la composition de résine présente un rapport molaire final entre l'aldéhyde et l'urée compris entre 1,0 et 3,0,
la mesure du pH étant effectuée conformément à la norme DIN 19263.

5. Procédé selon la revendication 4, dans lequel le mélange est acidifié avec un acide sélectionné dans le groupe constitué des: acides nitriques, acides sulfuriques, acides phosphoriques, acides chlorhydriques, nitrates d'ammonium, - sulfates, -chlorures, - hydrogénosulfates, -phosphates, -hydrogénophosphates, dihydrogénophosphates, hydrogénosulfites, acides sulfoniques, acides carboniques et dicarboniques en C1-C20, acides polycarboniques, acides carboniques aromatiques et leurs sels et leurs mélanges.

6. Procédé selon les revendications 4 ou 5, dans lequel le degré de condensation souhaité est réalisé pour atteindre la diluabilité souhaitée dans l'eau.

7. Utilisation de la composition de résine selon les revendications 1 à 3 comme matériau de liant pour des mats de fibres de verre et de polyester.

8. Utilisation de la composition de résine selon la revendication 7, dans laquelle la composition de résine présente des teneurs en solide entre 20 à 80 % en poids et une viscosité entre 1 et 10 000 mPa à 20 °C.

9. Utilisation de la composition de résine selon les revendications 1 à 3 comme matériau de liant pour les filtres en fibre de verre.

10. Procédé de préparation d'une composition de résine diluable dans l'eau selon la revendication 4, dans lequel la composition présente un rapport molaire initial avant condensation, entre l'aldéhyde et l'urée de 1,7 - 4.

11. Procédé de préparation d'une composition de résine diluable dans l'eau selon la revendication 4, dans lequel la composition présente un rapport molaire initial avant condensation, entre l'aldéhyde et l'urée de 2 - 3,5.

12. Procédé de préparation d'une composition de résine diluable dans l'eau selon la revendication 4, dans lequel la composition présente un rapport molaire initial avant condensation, entre l'aldéhyde et l'urée de 2 - 2,5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1633337 A
- US 4430380 A
- US 3883462 A
- WO 2009158174 A
- WO 2005035653 A